# EUROPEAN PATENT APPLICATION

(11) **EP 4 008 524 A1**
(43) Date of publication of application: **08.06.2022**
(21) Application number: 20846232.5
(22) Date of filing: 21.07.2020
(51) Int. Cl.: B29C 64/124, B29C 64/393, B29C 67/00, B33Y 10/00, B33Y 30/00, B28B 1/00

(54) **MANUFACTURING METHOD AND SYSTEM, 3D PRINTING APPARATUS AND IMAGE PROCESSING METHOD**

(30) Priority: 01.08.2019 CN 201910705232
(71) Applicant: Suzhou Laisai Intelligent Technology Co., Ltd., Shanghai 201101 (CN)
(72) Inventor: LIU, Zhen, Shanghai 201101 (CN)
(74) Representative: Böhm, Brigitte
(86) International application number: PCT/CN2020/103151
(87) International publication number: WO 2021/017937

(57) **Abstract**

Provided are a manufacturing method and system, a 3D printing apparatus and an image processing method. The manufacturing method comprises: coating an area, to be formed, with a first material and a second material respectively, wherein the first material is a viscous material containing a ceramic component, and the second material comprises a pigment; carrying out selective light curing on a material layer containing the first material and the second material so as to form a cross-section curing layer belonging to a dental restoration blank; and repeating these steps, so that cross-section curing layers are accumulated layer by layer so as to manufacture the dental restoration blank. The present application achieves the object of increasing a color effect during the manufacturing of a dental restoration blank.

## Description

### Field

The present application relates to the field of 3D manufacturing, and in particular, to a manufacturing method and system, a 3D printing apparatus and an image processing method.

### Background

Within the scope of dental treatment, the use of dental restorations (e.g. dentures) to repair and straighten teeth of patients is a common treatment option. Among other things, the shapes of teeth of each patient are different, so mass production using molds is not possible. Currently, every dental restoration is made artificially. For example, a basic body is cut out, and then shape grinding, coloring, sintering and other treatments are performed on the basic body according to a three-dimensional model constructed based on a missing whole tooth or part of a tooth. The manual method not only has a high requirement on manual skills, but also is time-consuming.

3D printing is a kind of rapid prototyping technology. It is a technique for constructing an object by layer-by-layer printing using bondable materials such as powdered metal, plastic and resin based on a digital model file. A 3D printing apparatus manufactures a 3D object by performing such a printing technique. With high forming precision, 3D printing apparatuses have a wide range of applications in the fields of molds, customized goods, medical jigs, prostheses, etc.

Due to high requirements on aesthetic effects based on color, transparency and the like of dental restorations, the existing 3D printing apparatus cannot meet the manufacturing requirements of dental restorations.

### Summary

In view of the above-mentioned shortcomings in the prior art, an object of the present application is providing a manufacturing method and system, a 3D printing apparatus and an image processing method to solve the problem that 3D printing technology in the prior art cannot effectively improve the aesthetic effects of dental restorations.

To achieve the above object and other related objects, in a first aspect of the present application, a manufacturing method is provided, which is applied to a 3D printing apparatus to manufacture a dental restoration blank, the manufacturing method including: coating an area-to-be-formed with a first material and a second material respectively, wherein the first material is a viscous material containing a ceramic component, and the second material contains a pigment; carrying out selective light curing on a material layer containing the first material and the second material so as to form a cross-section cured layer belonging to a dental restoration blank; and repeating these steps, so that cross-section cured layers are accumulated layer by layer so as to manufacture the dental restoration blank.

In a second aspect of the present application, a 3D printing apparatus is provided, the apparatus including: a forming chamber accommodating a build platform therein; an optical system configured to selectively cure a radiated material layer to form a cross-section layer belonging to a dental restoration blank; a Z-axis movement mechanism connected to the build platform, to cause the build platform to move to provide an area-to-be-formed in the forming chamber; a first replenishment device configured to provide a first material to be coated, wherein the first material is a viscous material containing a ceramic component; a second replenishment device configured to provide a second material to be coated, wherein the second material contains a pigment; a first coating device configured to coat the area-to-be-formed with the first material; a second coating device configured to coat the area-to-be-formed with the second material; and a control device configured to control the optical system, the Z-axis movement mechanism, the first replenishment device, the second replenishment device, the first coating device and the second coating device, and accumulate, layer by layer, cross-section cured layers on the build platform so as to manufacture the dental restoration blank.

In a third aspect of the present application, a control device for a 3D printing apparatus is provided, the control device including: a storage unit configured to store a dental restoration model to be formed, and at least one program; and a processing unit connected to the storage unit, and configured to execute the at least one program to control the 3D printing apparatus to execute the manufacturing method according to any implementation of the first aspect so as to manufacture a dental restoration blank corresponding to the dental restoration model.

In a fourth aspect of the present application, a manufacturing method is provided, including: using a dental restoration blank obtained by the manufacturing method according to any implementation of the first aspect; and processing the obtained dental restoration blank to obtain a dental replacement physical object.

In a fifth aspect of the present application, an image processing method is provided, including: constructing a support model for an original model of a dental restoration; and performing layering processing on a dental restoration model containing the support model, wherein in a sliced pattern of a same layer, there is a gap between a sliced area of the support model and a sliced area of the original model of the dental restoration.

In a sixth aspect of the present application, a computer device is provided, including: a storage unit configured to store at least one program; and a processing unit configured to call the program stored in the storage unit to execute the image processing method in the fifth aspect.

As described above, the manufacturing method and system, the 3D printing apparatus and the image processing method of the present application have the following beneficial effects: the second coating device in the 3D printing apparatus in the present application can coat the area-to-be-formed with the second material containing the pigment layer by layer, thus achieving the object of improving the color effect during manufacturing of the dental restoration blank; furthermore, with the pigment added layer by layer, the color of the manufactured dental restoration blank can comply with the requirement of inconsistent color of a manufactured dental restoration physical object. In addition, with the design of a support for the e.g., dental restoration blank provided in the present application, there is a gap between the designed support model and the original model of the dental restoration, so during manufacturing, the manufactured support can function to support the dental restoration blank and does not need to be removed from the dental restoration blank. The methods and apparatus provided in the present application effectively improve the manufacturing efficiency of the dental restoration physical object.

### Brief Description of the Drawings

Fig. 1 shows a structure diagram of a 3D printing apparatus of the present application in an implementation.
Fig. 2 shows a structure diagram of a second coating device and a second replenishment device in the 3D printing apparatus of the present application in an implementation.
Figs. 3a and 3b show graphical diagrams of corresponding color data for pixel points of sliced patterns in a dental restoration model of the present application, respectively.
Fig. 4 shows a flow diagram of a manufacturing method of the present application in an implementation.
Fig. 5 shows a flow diagram of a manufacturing method of the present application in a further implementation.
Fig. 6 shows a flow diagram of a manufacturing method of the present application in another implementation.
Fig. 7 shows a structure diagram of the 3D printing apparatus of the present application in further implementation.
Fig. 8 shows a flow diagram of a manufacturing method of the present application in yet another implementation.
Fig. 9 shows a flow diagram of an image processing method for constructing a support model for an original model of a dental restoration of the present application in an implementation.
Fig. 10 shows an image diagram of an original model of a dental restoration and a support model constructed in the present application.

### Detailed Description of the Embodiments

Before a dental restoration is manufactured by using a 3D printing apparatus, a dentist uses X-ray imaging, CT (Computed Tomography), CBCT (Cone beam CT), scanner or other technology to form images according to dental data in a patient's mouth to obtain image data containing a tooth vacancy site to be repaired and teeth located above (or below) it on the left and right. The dentist determines the dental restoration to be manufactured based on the acquired image data; a technician designs an original model corresponding to the dental restoration according to the acquired image data, and then processes the original model of the dental restoration into three-dimensional model data (hereinafter referred to as a dental restoration model) that can be processed by the 3D printing apparatus. The dental restoration includes at least one of: denture teeth, bridges, crowns, space maintainers, tooth replacement appliances, orthodontic parts, orthodontic retainer, dentures, posts, jackets, inlays, onlays, facings, implants, abutments, splints, partial crowns, teeth, cylinders, pins, connectors, orthodontic brackets, etc. Each dental restoration model contains layered data required for layer-by-layer printing by the 3D printing apparatus, a sliced pattern determined based on a cross-section contour of an upper or lower surface of each layer, a placement angle determined based on a layer-by-layer printing sequence, support structure data set based on the placement angle, etc.

In a method of manufacturing the dental restoration using 3D printing technology, the 3D printing apparatus cures a photocurable resin mixed with a ceramic component layer by layer to obtain a dental restoration blank corresponding to the above-mentioned three-dimensional model data. As the manufactured dental restoration blank does not meet the color requirement, operations of sintering, glazing, coloring and the like need to be carried out by manual finishing. Therefore, in the manufacturing process, the existing 3D printing apparatus does not improve the manufacturing efficiency of the dental restoration.

With the development of dental medical technology, oral image data collected by a dentist contains color data, and an original model of a dental restoration manufactured by a technician based on the color data in the acquired oral image data also contains color data. After layering processing is performed on the original model of the dental restoration containing the color data, color data corresponding to each layer is obtained. A 3D printing apparatus provided in the present application manufactures a corresponding dental restoration blank based on the color data corresponding to each layer.

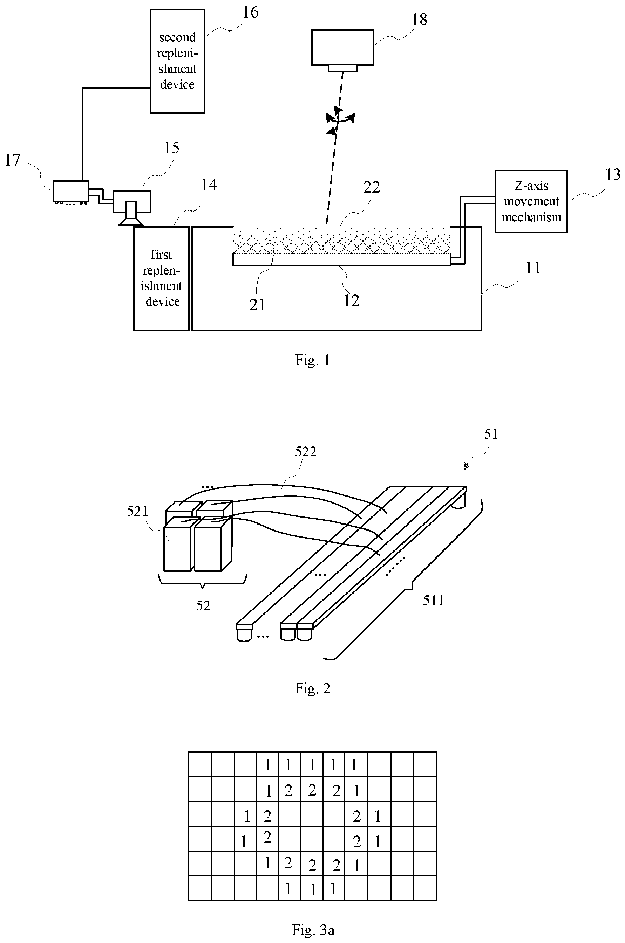

Please refer to Fig. 1, which shows a structure diagram of the 3D printing apparatus in an implementation. The 3D printing apparatus includes a forming chamber 11, an optical system 18, a Z-axis movement mechanism 13, a first replenishment device 14, a second replenishment device 16, a first coating device 15, a second coating device 17, and a control device (not shown).

The forming chamber is configured to provide a manufacturing environment for manufacturing a dental restoration blank. In some embodiments, the forming chamber provides an enclosed space for layer-by-layer printing. For example, the forming chamber formed by means of a housing of the 3D printing apparatus can provide a manufacturing environment such as a constant-temperature and vacuum manufacturing environment for manufacturing the dental restoration blank. In other embodiments, the forming chamber provides a non-enclosed space, and during layer-by-layer printing in the space, various materials replenished by the first replenishment device and second replenishment apparatus are coated to an area-to-be-formed in the forming chamber and excess coated materials are collected. For example, the forming chamber includes a non-enclosed cavity, and the replenished various materials are collected at the bottom of the cavity.

The forming chamber contains a cavity therein, an upper surface of which facing the optical system is not capped. Within the cavity, there is provided a build platform movable vertically (i.e., moving along a Z axis) within the cavity. The build platform can move up to be flush with, or even above, the upper surface of the cavity. The build platform includes, for example, a component board. When flush with the upper surface of the cavity, the build platform adjoins a wall of the cavity. The build platform is configured to be attached with the dental restoration blank formed by layer-by-layer curing. The manufactured dental replacement blank is located in the area-to-be-formed between the build platform and the upper surface of the cavity, wherein the area of the area-to-be-formed is smaller than or equal to the surface area of the build platform. Every time the build platform descends a distance of a layer height, a space for material replenishment is vacated between the build platform and the upper surface of the cavity, and the space vacated between the build platform and the upper surface of the cavity is used as the area-to-be-formed to be filled with materials by the first coating device and the second coating device. During the descent, materials falling from the build platform are collected at the bottom of the cavity. After the materials filled in the area-to-be formed are selectively cured, the build platform descents again a distance of a layer height, and so on, such that the build platform is attached with the dental restoration blank formed by layer-by-layer curing.

The Z-axis movement mechanism is connected to the build platform, to cause the build platform to move to provide the area-to-be-formed in the forming chamber. Here, the Z-axis movement mechanism includes a drive unit and a vertical movement unit. The first drive unit is configured to drive the vertical movement unit so that the vertical movement unit causes the build platform to perform ascending and descending movements (i.e., moving along the Z axis). For example, the drive unit is a drive motor. The drive unit is controlled by a control instruction. The control instruction includes: a directional instruction for indicating ascending, descending or stop of the build platform, and may even contain rotating speed/rotating speed acceleration, or torque/torsion or other parameters for controlling an ascending/descending speed. This is advantageous for accurately controlling an ascending/descending distance of the vertical movement unit to achieve precise adjustment of the Z axis. The vertical movement unit includes, for example, a fixing rod with one end fixed to the build platform, and an articulated movement component fixed to the other end of the fixing rod. The articulated movement component is driven by the drive unit to cause the fixing rod to move vertically, and the articulated movement component is, for example, a limiting movement component articulated by a toothed structure, such as a rack or the like. As another example, the vertical movement unit includes a screw rod and a positioning movement structure screwed to the screw rod, wherein both ends of the screw rod are screwed to the drive unit, and an extension end of the positioning movement structure is fixedly connected to the build platform, and the positioning movement structure may, for example, a ball screw.

The Z-axis movement mechanism is partially or entirely located within the forming chamber. For example, the vertical movement unit of the Z-axis movement mechanism is located inside the cavity of the forming chamber and connected to the build platform, and the drive unit is located outside the cavity of the forming chamber to reduce the influence of the materials collected in the cavity on the operation of the drive unit.

The first replenishment device is configured to provide a first material to be coated, wherein the first material is a viscous paste or slurry material containing a ceramic component. The ceramic component includes, but is not limited to, any ceramic material with strength capable of withstanding forces in the mouth. The ceramic component is in the form of particles. Examples of the ceramic component include, but are not limited to, glass-ceramic materials, glass materials, high-strength ceramic materials such as alumina, zirconia, mullite, silicon dioxide, spinel, tricalcium phosphate, apatite, fluorapatite, hydroxyapatite, and mixtures thereof. To enhance the subsequent sintering operation, the ceramic component may also contain silicon dioxide coated particles. The first material is a viscous material formed by mixing at least one ceramic component described above and a material. The material includes, but is not limited to, a photocurable resin or a solvent. The solvent includes, for example, water, an adhesive, or the like. The weight ratio of the ceramic component in the first material is between 40% and 95%. For example, the weight ratio of the ceramic component in the first material is between 70% and 95%.

The photocurable resin includes a photocurable resin prepolymer, a reactive diluent and a photoinitiator, etc. The photocurable resin prepolymer is any one selected from an acrylic resin and an epoxy resin or a mixture of both. The acrylic resin includes, but is not limited to, bisphenol A diglycidyl ether diepoxy acrylic resin, urethane acrylate, and polyester acrylate. The epoxy resin includes, but is not limited to, bisphenol A diglycidyl ether diepoxy resin, dicyclopentadienyl phenol epoxy resin, glycidyl ester epoxy resin, glycidyl amine epoxy resin, and soybean oil modified epoxy resin. The reactive diluent is, for example, an acrylate monomer. The acrylate monomer includes, but is not limited to, tricyclodecyl dimethanol diacrylate, isobornyl acrylate, octadecyl acrylate, propoxylated neopentyl glycol diacrylate, alkoxylated pentaerythritol tetraacrylate, phenoxyethyl acrylate, ethoxylated trihydroxymethyl triacrylate, tripropylene glycol diacrylate, and 1,6-ethylene glycol diacrylate. The photoinitiator is any one selected from a cationic photoinitiator and a free radical photoinitiator, or a mixture of both. The cationic photoinitiator includes, but is not limited to, bis(2,6-difluoro-3-(1-hydropyrro-1-yl)-phenyl))ferrocene, 4-isobutylphenyl-4'-methylphenyl iodonium hexafluorophosphate, and 4-(phenylthio)phenyl diphenyl sulfonium hexafluorophosphate. The free radical photoinitiator includes, but is not limited to, 2,4,6-(trimethylbenzoyl)diphenylphosphine oxide, 1-hydroxycyclohexyl phenyl ketone, benzoin dimethyl ether, isopropyl thioxanthone, diphenyl ketone, thioxanthrone, and ethyl-4-(dimethylamino)benzoate. The modified inorganic powder includes inorganic powder and a surface modifier.

The first material may further contain a material for adjusting the light transmittance of the dental restoration blank, such as yttrium oxide, lanthanum oxide, zirconium oxide, or the like. According to the requirement on light transmittance, the mass fraction of the material for adjusting the light transmittance contained in the first material is in a range of 5wt% to 11wt%. The type of the powder is selected as needed. For example, the mass ratio of 3Y-TZP to (4-6)Y-PSZ powder is in a range of 2:1 to 4:1. The ratio of the components in the first material may be determined based on the position of a physical object of the manufactured dental restoration in the oral cavity. For example, if the physical object of the manufactured dental restoration is used for repairing an incisor tooth, the mass ratio of yttrium oxide in the first material composition is higher; correspondingly, if the physical object of the manufactured dental restoration is used for repairing a molar tooth, the mass ratio of yttrium oxide in the first material composition is lower.

The first replenishment device may be placed in the forming chamber. For example, the first replenishment device is located underneath an inner side of the cavity; and an adjoining plate may be provided at a position where a discharge port of the first replenishment device is adjacent to the upper surface of the cavity and the area-to-be-formed, to stack the first material and reduce the gap between the discharge port and the area-to-be-formed. The first replenishment device may be placed outside the forming chamber. For example, the first replenishment device is located in a storage space on one side of the forming chamber, and a discharge port of the first replenishment device provides the first material to the forming chamber through an external conduit.

The first replenishment device includes an accommodating cavity for accommodating the first material and a paste export unit. In some embodiments, the first material is injected into the accommodating cavity, and the paste export unit exports a preset volume of the first material by adjusting the volume of the accommodating cavity. For example, a cavity wall of the accommodating cavity is a rigid structure and forms an integral structure with the discharge port; and the paste export unit includes a piston located in the accommodating cavity and a drive module for driving the piston, wherein under the drive of the drive module, the piston pushes the first material out of the discharge port. In further embodiments, the accommodating cavity forms an integral structure with the discharge port and contains a bag of first material; and the paste export unit exports a preset volume of the first material by adjusting the volume of the bag. For example, the paste export unit includes an adjustment module and a drive module for driving the adjustment module, wherein the adjustment module includes a clamping part and a rolling shaft. The clamping part clamps the bottom of the bag containing the first material, and the drive module drives the rolling shaft to rotate the clamping part to shrink the bag volume. Under the drive of the drive module, the adjustment module pushes the first material out of the discharge port. In other embodiments, the accommodating cavity contains the first material, and the paste export unit exports a preset volume of the first material to the discharge port by vacuum pumping. For example, the paste export unit includes a conduit connected to the discharge port and an air pressure adjustment module, wherein the air pressure adjustment module increases the air pressure in the accommodating cavity or decreases the air pressure in the conduit to export the first material to the discharge port. In still further embodiments, the first replenishment device is placed above an edge of the area-to-be-formed, and the discharge port and a control switch for controlling the discharge port are provided below the first replenishment device. A preset volume of the first material is stacked at the edge of the area-to-be-formed by on/off of the control switch.

The first coating device is arranged above the cavity of the forming chamber and at least stretches across the area-to-be-formed. The first coating device is configured to coat the area-to-be-formed with the exported first material. In some embodiments, the first coating device includes a nozzle unit with at least one row of spray holes, movement units located on two opposite sides of the area-to-be-formed, and a mounting beam stretching across the movement units, wherein two ends of the mounting beam are fixed to movement modules of the movement units, and the nozzle unit is fixed to the mounting beam, and the movement modules move along tracks in the movement units; and during a period the mounting beam drives the nozzle unit to move in the area-to-be-formed, the nozzle unit fills the exported first material into the area-to-be-formed.

In further embodiments, the first coating device is a recoater assembly, and the exported first material is placed on a side of the area-to-be-formed. For example, the recoater assembly includes a scraper body, movement units located on two opposite sides of the area-to-be-formed, and a mounting beam stretching across the movement units, wherein the scraper body is fixed to the mounting beam, and two ends of the mounting beam are fixed to movement modules of the movement units, and the movement modules move along tracks in the movement units. Under the drive of the movement units, the scraper body pushes the exported first material to the area-to-be-formed and coats the entire area-to-be-formed with the same.

The area-to-be-formed also needs to be coated with a second material containing a pigment. The second material may be color-matched according to a color card of a preset standard. The preset color standard includes, but is not limited to: VITA colorimetric plate, custom color card standards, etc.

The pigment includes, but is not limited to, any one or more combinations of: a compound containing two or more rare earth metal ions selected from the group consisting of praseodymium ions, erbium ions, cerium ions, and neodymium ions, and at least one oxide of an element selected from the group consisting of iron, titanium, vanadium, manganese, copper, chromium, cobalt, nickel, selenium and at least one rare earth metal selected from cerium, terbium, erbium, neodymium, praseodymium, samarium, and europium. For example, the pigment is a soluble salt of two or more types of rare earth ions selected from the group consisting of praseodymium ions, erbium ions, neodymium ions, and cerium ions, and the anion of the soluble salt is one or more selected from the group consisting of chloride ions, acetate radicals, nitrate radicals, thiocyanate radicals, and sulfate radicals, wherein the ratio between the rare earth ions is Pr:Er:Ce:Nd=1:(10-50):(0-10):(0-25), preferably Pr:Er:Ce:Nd=1:(12-50):(1-10):(3-25). As another example, the pigment contains 0.5-30 wt% of iron oxide. The second material further includes a solvent, which is capable of dissolving the selected pigment as a minimum standard and may be used alone or mixed with water or an alcohol solvent; and the alcohol is, for example, a small molecular alcohol with high solubility in water. The small molecular alcohol is, for example, selected from methanol, ethanol, isopropanol, n-propanol, glycerol, and/or ethylene glycol, etc. The second material may also include an additive. The additive is used to ensure that the dental restoration blank is a pure organic substance free of any harmful residue after sintering. The additive includes, but is not limited to, a thixotropic agent. The thixotropic agent is, for example, one or more selected from glucose, sucrose, polydextrose, polyvinyl alcohol, PEG-600, etc.- The additive may further include a surfactant, which is, for example, one or more selected from octylphenol polyoxyethylene ether, nonylphenol polyoxyethylene ether, high carbon fatty alcohol polyoxyethylene ether, polyoxyethylene fatty acid, polyoxyethylene amine, etc.

To enable the first material and the second material to fuse in a shorter time, the first material and the second material may further include mutually reactive materials to promote the permeation of the second material into the first material. Depending on the composition in the first material and the second material, the mutually reactive materials are so selected as not to react with other components in the first material or the second material into which they are mixed, as a minimum configuration.

The second replenishment device is configured to provide the second material. The second replenishment device may be placed inside the forming chamber or in a material storage area outside the forming chamber. Since the color of the tooth is not uniformly distributed from the root to the cusp, color data corresponding to each layer in the original model of the dental restoration generated from the image data obtained based on oral photography is not completely same. Thus, depending on the molar ratio or mass ratio of the same or different pigments in the second material, the second replenishment device includes at least two containers for independently containing the second material, wherein the pigment composition and/or ratio in the second material contained in each container is different. For example, the second material contained in each container differs in the type of pigment composition, or has the same pigment composition but differs in the pigment mass ratio (or molar ratio), or differs in both pigment composition and mass ratio (or molar ratio).

In the second replenishment device, second material export units are provided correspondingly to the containers to guide the corresponding second material to the second coating device. In some embodiments, the second material export unit includes a flow guide mechanism led out of a container opening from an area in the container lower than the surface of the second material, and a pressure adjustment module, wherein the pressure adjustment module increases the air pressure in the corresponding container or decreases the air pressure in the flow guide mechanism to guide the second material into the second coating device. In further embodiments, the second material export unit includes a flow guide mechanism connected to a corresponding container opening, and an adjustment module, wherein the second material export unit guides the second material into the second coating device by adjusting the volume of the container. In a specific example, the container has a downward container opening, and the second material export unit includes a flow guide mechanism and a flow guide switch, wherein the flow guide switch is provided on the flow guide mechanism. When the flow guide switch is turned on, the second material in the container is guided through the flow guide mechanism to the second coating device; and conversely, when the flow guide switch is turned off, the corresponding flow guide mechanism is blocked. In another specific example, the second material export unit exports the second material into the second coating device by adjusting the volume of the corresponding container. For example, the second material export unit includes a piston located inside the container and a drive module connected to the piston, and a flow guide mechanism, wherein under the drive of the drive module, the piston pushes the second material out of the container, and the second material is guided by the flow guide mechanism into the second coating device. In a further specific example, the container contains a bag of second material; and the second material export unit exports a preset volume of the second material by adjusting the volume of the bag. For example, the second material export unit includes an adjustment module and a drive module for driving the adjustment module, and a flow guide mechanism, wherein the adjustment module includes a clamping part and a rolling shaft. The clamping part clamps the bottom of the bag containing the second material, and the drive module drives the rolling shaft to rotate the clamping part to shrink the bag volume. Under the drive of the drive module, the adjustment module pushes the second material out of the container, and the second material is guided by the flow guide mechanism into the second coating device.

The second coating device is configured to coat the area-to-be-formed with the second material. Here, the second coating device and the first coating device can coat the-area-to-be-formed with the corresponding second material and the first material sequentially. Depending on the coating sequence of the first coating device and the second coating device, the second coating device may have the same structure or a different structure.

In some embodiments, the second coating device has the same structure as the first coating device. For example, the second coating device is a recoater assembly, and the second coating device is orthogonal to the direction of movement of the first coating device; correspondingly, the second replenishment device guides the formulated at least one second material to a side of the cavity of the forming chamber so as to be coated by the second coating device to the area-to-be-formed.

In further embodiments, the second coating device is a spraying assembly, and the second coating device may share a movement unit and a mounting beam with the first coating device, or is separately provided with a movement unit and a mounting beam in a direction same as or orthogonal to the coating direction of the first coating device. In addition, the second coating device includes a nozzle unit, which includes at least one spray hole and is fixed to the corresponding mounting beam. Each spray hole may be connected to the flow guide mechanism of each container through a separate channel, or a plurality of channels that are at least partially shared. The nozzle unit includes a spray hole array. In an example, see Fig. 2, which shows a structure diagram of the spray hole array in the second coating device and the second replenishment device in an implementation. The spray hole array 51 in the polyoxymethylene second coating device includes a plurality of spray hole rows 511, and spray holes in each spray hole row 511 are arranged according to pixel spacing and the size occupied by pixel points in the sliced pattern, and each spray hole row 511 is connected to one container 521 in the second replenishment device 52, which means that each spray hole row 511 draws and sprays the second material from the same container 521 through the flow guide mechanism 522. In an example, for each spray hole row 511 in the spray hole array 51 shown in Fig. 2, the length of the spray hole row 511 is equivalent to the width of the area-to-be-formed, and as the second coating device moves with the first coating device from one side to the other side of the area-to-be-formed, the spray hole row 511 can spray the entire area-to-be-formed in a traversing manner. In another example, each spray hole row 511 of the spray hole array 51 shown in Fig. 2 includes fewer spray holes, and the second coating device further includes a second movement unit moving along the mounting beam, and the spray hole array is provided on the second movement unit, whereby the spray hole array 51 moves in the moving direction of the scraper and the moving direction of the mounting beam respectively to spray the entire area-to-be-formed in a traversing manner.

The nozzle unit further includes a control array corresponding to the spray holes. During coating, the control array controls spray holes at corresponding pixel positions according to current positions of the spray holes in the spray hole array and corresponding pixel row (or column) positions in the sliced pattern, and color data of the corresponding pixel rows (or columns) to spray the corresponding second material to the area-to-be-formed. For example, the control array controls the spray holes corresponding to the pixel positions to spray the second material, and controls spray holes not corresponding to the pixel positions not to spray the second material. On this basis, the control array may also control the volume of the second material being sprayed.

In the case where the first coating device is a recoater assembly and the second coating device is a spraying assembly, for example, the nozzle unit in the second coating device is fixed to the mounting beam of the recoater assembly and is arranged ahead of the scraper body by a preset spacing distance; and when the recoater assembly coats the area-to-be-formed, the second coating device sprays acquired at least one second material to the area-to-be-formed before the first material, and then the subsequent scraper body coats the sprayed second material with the first material, thus forming a material layer to be cured. Alternatively, the nozzle unit of the second coating device is fixed to the mounting beam of the recoater assembly and is arranged behind the scraper body by a preset distance; and when the recoater assembly coats the area-to-be-formed, the first coating device coats the area-to-be-formed with the first material, and then the subsequent nozzle unit sprays at least one second material to the coated first material, thus forming a material layer to be cured. Alternatively, the nozzle unit in the second coating device covers the entire area-to-be-formed and sprays at least one second material based on the shape outlined by the sliced pattern. Thus, the second coating device further includes a movement unit for driving the nozzle unit to cover the area-to-be-formed and to leave the area-to-be-formed.

The optical system is configured to selectively cure a radiated material layer to form a cross-section layer belonging to a dental restoration blank. The optical system radiates light energy towards a cavity opening of the forming chamber. The optical system is located above the cavity opening and radiates light energy within the range of the build platform to cure a material layer in the area-to-be-formed.

In some embodiments, the optical system is an optical system that provides optical radiation in a scanning-based manner. For example, the optical system includes a laser emitter, a lens set located on an exit light path of the laser emitter, and a galvanometer set located on an emergent side of the lens set (all not shown), wherein the laser emitter is controlled to adjust the energy of an output laser beam. For example, the laser emitter is controlled to emit a laser beam of a preset power and to stop emitting the laser beam. As another example, the laser emitter is controlled to increase the power of a laser beam and decrease the power of the laser beam. The lens set is configured to adjust a focus position of the laser beam. The galvanometer set is configured to perform scanning with the laser beam in a two-dimensional space on a bottom surface of the container in a controlled manner, and the material scanned with the light beam is selectively cured into a corresponding pattern cured layer.

In other embodiments, the optical system is an optical system that provides optical radiation in a surface-projection-based manner. For example, the optical system includes a light source, a DMD chip, a controller and a storage module. The storage module stores sliced patterns corresponding to cross sections in three-dimensional model data to be described by image data. The DMD chip irradiates pixels on an image of a corresponding layer to the coated material after receiving a control signal from the controller. The DMD chip looks like a small mirror, and is packaged in a closed space formed by a metal and glass. In fact, this mirror is composed of hundreds of thousands or even millions of micromirrors, each representing a pixel, and a projected image is composed of the pixels. The DMD chip may be simply described as semiconductor optical switches and micromirrors corresponding to pixels, and the controller allows/prohibits light reflection by the micromirrors by controlling the optical switches in the DMD chip, thereby radiating the corresponding layer image onto the coated material such that the material corresponding to the image shape is selectively cured to obtain a patterned cured layer. As another example, the optical system includes a light source, an LCD (Liquid Crystal Display) and a controller. The controller controls the LCD to transmit or not transmit light according to positions of pixel points in a received sliced pattern, such that the material corresponding to the image shape is selectively cured to obtain a patterned cured layer.

The 3D printing apparatus further includes a control device configured to control the optical system, the Z-axis movement mechanism, the first replenishment device, the second replenishment device, the first coating device and the second coating device, and accumulate, layer by layer, cross-section cured layers on the build platform so as to manufacture the dental restoration blank.

Here, the control device includes a storage unit, a processing unit, and a data interface unit. The storage unit includes a non-volatile memory, a volatile memory, etc. The non-volatile memory is, for example, a solid state hard disk or a USB flash disk. The storage unit is connected to the processing unit via a system bus. The processing unit includes at least one of a CPU or a chip integrated with a CPU, a programmable logic device (FPGA), and a multi-core processor. There are a plurality of data interfaces. The data interface unit is respectively connected to devices in the 3D printing apparatus that are packaged independently and transmit data through interfaces, such as the optical system, the Z-axis movement mechanism, the first replenishment device, the second replenishment device, the first coating device and the second coating device. The devices further include at least one of a prompt device, a human-machine interaction device, and the like. Interface types of the data interface unit are determined according to devices to be connected, and include but are not limited to a universal serial interface, a video interface, an industrial control interface, and the like. For example, the data interface unit includes: a USB interface, an HDMI interface, and an RS232 interface, wherein there are multiple USB interfaces and multiple RS232 interfaces. The USB interfaces can be connected to the human-machine interaction device and the like, and the RS232 interfaces are connected to a detection device and the Z-axis movement mechanism, and the HDMI interface is connected to the optical system, etc.

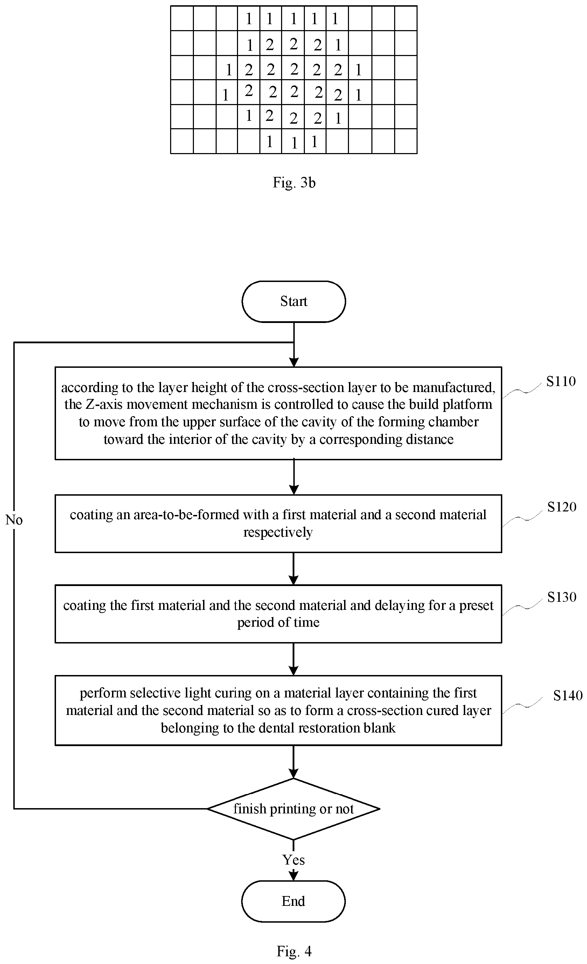

In some implementations, the storage unit in the control device stores a dental restoration model containing color data, layered data, and sliced patterns for layers. In some specific examples, the color data may correspond to the entire dental restoration model. In further specific examples, the color data corresponds to a sliced pattern of each layer. For example, pixel points of the sliced pattern of each layer are assigned same color data, that is, voxels defined by areas and layer heights of the pixel points in the sliced pattern of each cross-section layer in the dental restoration model correspond to same color data, and color data of different cross-section layers are not completely same. In other specific examples, the color data corresponds to color distribution data of a sliced pattern of each layer. For example, referring to Fig. 3a, which shows a schematic diagram of color distribution data in pixels of a sliced pattern in an implementation, colors of pixel points of the sliced pattern of each layer change inward from the outer contour, that is, voxels defined by areas and layer heights of the pixel points in the sliced pattern of each cross-section layer in the dental restoration model are assigned color data of the corresponding pixel points, and change their colors inward from the voxels corresponding to the outer contour of the sliced pattern based on a preset color offset, wherein the numbers 1 and 2 denote two types of color data, respectively. As another example, please refer to Fig. 3b, which shows a schematic diagram of color distribution data in pixels of a sliced pattern in an implementation, wherein each grid represents a pixel point, an area formed by pixel points marked with 1 and 2 represents a sliced pattern of a layer, and the numbers 1 and 2 represent different color data, respectively, that is, voxels defined by areas and layer heights of the pixel points in the sliced pattern of each cross-section layer in the dental restoration model are assigned color data of the corresponding pixel points, and their colors are not completely same while changing inward from the voxels corresponding to the outer contour of the sliced pattern. In addition, the width of color distribution of pixels in a sliced pattern of each layer in the tooth restoration at an incisor tooth site is wider than the width of color distribution of pixels in a sliced pattern of each layer in the tooth restoration at a molar tooth site.

In other embodiments, in the dental restoration model stored in the storage unit, the sliced pattern corresponding to at least one cross-section layer contains color data of two or more colors. For example, according to a color palette standard, the color data of the pixel points in a sliced pattern of a cross-section layer includes two pigment numbers.

The color data may be data determined based on the pigment composition and/or ratio in the second material adopted. For example, the color data is color card numbers corresponding to a preset standard, the color card numbers being consistent with colors provided by the second material contained in the second replenishment device. As another example, the color data includes pigment numbers, pigment concentrations, etc. As yet another example, the color data includes numbers of the containers in the second replenishment device, the container numbers corresponding to the compositions and ratios of the pigments in the second material contained therein. The color data may also include volume information of the second material, wherein the volume information includes, but is not limited to, the percentage of a unit droplet volume, the volume of droplets sprayed, etc. For example, the color data includes color card numbers and the percentage of volume to be sprayed. The color data may be assigned directly to pixel positions of the sliced pattern, or a color data file may be used to describe the color data distributed in each sliced pattern in the model.

Please refer to Fig. 4, which shows a flow diagram of manufacturing a dental restoration blank in an implementation. The processing unit in the control device performs the following step according to the layer heights, the sliced pattern of each layer, the color data corresponding to each sliced pattern, and the like provided by the dental restoration model to manufacture the corresponding dental restoration blank.

In step S 110, according to the layer height of the cross-section layer to be manufactured, the Z-axis movement mechanism is controlled to cause the build platform to move from the upper surface of the cavity of the forming chamber toward the interior of the cavity by a corresponding distance, thereby forming the area-to-be-formed between the upper surface of the cavity and the build platform.

In step S120, coating an area-to-be-formed with a first material and a second material respectively. Specifically, the processing unit determines the volume of the first material to be coated to the area-to-be-formed according to the layer height of the layer to be manufactured, and controls the first replenishment device to push the first material to the first coating device based on the volume; and the processing unit also controls the second replenishment device to guide at least one second material to the second coating device according to the color data in the corresponding layer. For example, the processing unit controls in the first replenishment device

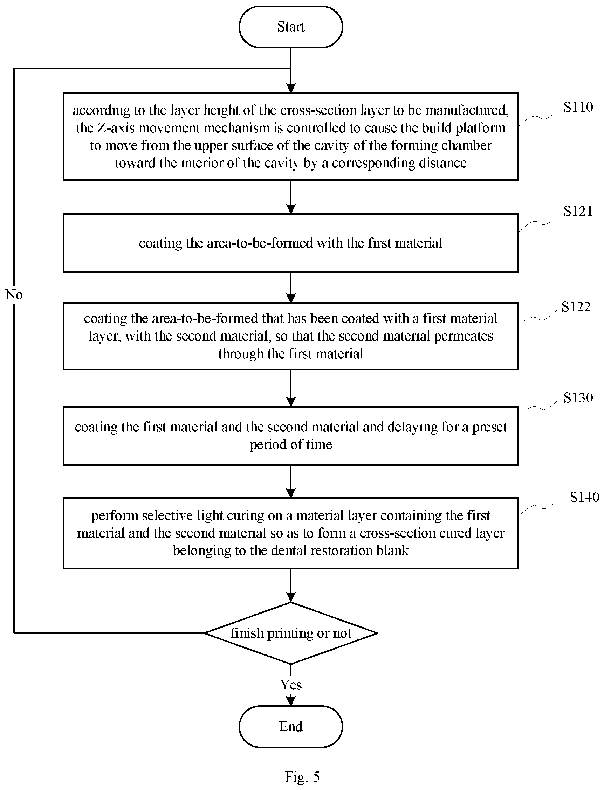

In some embodiments, please refer to Fig. 5, which shows a flow diagram of manufacturing a dental restoration blank in an implementation. Different from Fig. 3, step S120 in Fig. 4 is implemented by steps S121 and S122 in Fig. 5.

In step S121, coating the area-to-be-formed with the first material.

In step S122, coating the area-to-be-formed that has been coated with a first material layer, with the second material, so that the second material permeates through the first material.

Here, as shown in Fig. 1, the first coating device 15 coats the area-to-be-formed with the first material 21 before the second coating device 17. That is, the first material 21 is coated by the first coating device 15, and then the second material 22 is coated by the second coating device 17.

In an example where the first coating device is a recoater assembly and the second coating device includes a spray hole array, before coating, the processing unit controls the first replenishment device to push the first material to an edge of the-area-to-be-formed, and controls the second replenishment device to guides each second material into a corresponding spray hole row, and the processing unit controls the first coating device to coat the area-to-be-formed with the pushed first material, and at the same time, also controls the second coating device to spray, in an area where the first material has been coated in the area-to-be-formed, the drawn second material onto the first material in the entire area-to-be-formed.

In another example, the second coating device may adjust the second material to be sprayed according to color distribution data of pixels in a sliced pattern. Still in the case where the first coating device is a recoater assembly and the second coating device includes a spray hole array as an example, and based on the sliced patterns and color distribution data shown in Figs. 3a and 3b, during coating, the processing unit controls one spray hole row in the nozzle unit to spray the second material corresponding to the mark number 1 to pixel positions marked with 1, and controls another spray hole row in the nozzle unit to spray the second material corresponding to the mark number 2 to pixel positions marked with 2, according to the color distribution data.

In yet another example, the second coating device sprays a corresponding plurality of second materials in the area-to-be-formed according to color data of various colors correspondingly included in pixels in a sliced pattern. Still in the case where the first coating device is a recoater assembly and the second coating device includes a spray hole array as an example, during coating, the processing unit controls the nozzle unit in the second coating device according to a plurality of color values corresponding to pixel positions in the sliced pattern corresponding to a cross-section layer, and when a spray hole row for spraying one second material is aligned to pixel positions in the corresponding sliced pattern, the corresponding second material is sprayed onto the area-to-be-formed. In this way, a plurality of second materials are sprayed at corresponding positions in the area-to-be-formed for the pixel positions with the plurality of color values. For example, the color data corresponding to the sliced pattern of a cross-section layer is preset to include two pigment numbers as shown in Fig. 3a or 3b, the number 1 and the number 2; correspondingly, a first spray hole row of the nozzle unit in the second coating device is configured to spray a second material corresponding to the number 1, and a second spray hole row is configured to spray a second material corresponding to the number 2; during coating, when monitoring the first spray hole row moves to a position in the area-to-be-formed corresponding to a pixel row with the number 1 in the sliced pattern, the processing unit controls spray holes in the first spray hole row corresponding to corresponding pixels of the sliced pattern to spray a second material; and when monitoring the second spray hole row moves to a position in the area-to-be-formed corresponding to a pixel row with the number 2 in the sliced pattern, the processing unit controls spray holes in the second spray hole row corresponding to corresponding pixels of the sliced pattern to spray another second material.

It is to be noted that the pixel points with color data in multiple sliced patterns corresponding to the same cross-section layer as described above are not necessarily non-overlapping, but may partially or completely overlap, and the processing unit controls spray hole rows in the second coating device to spray various second materials at corresponding positions according to the color data at the same pixel point positions in the sliced patterns.

In yet another example, color data in a sliced pattern further includes volume information, and the processing unit controls the volume of the second material to be sprayed by a control array in the second coating device at corresponding positions according to color data of pixel points. This can achieve more accurate manufacture with different color depths under the same color card number.

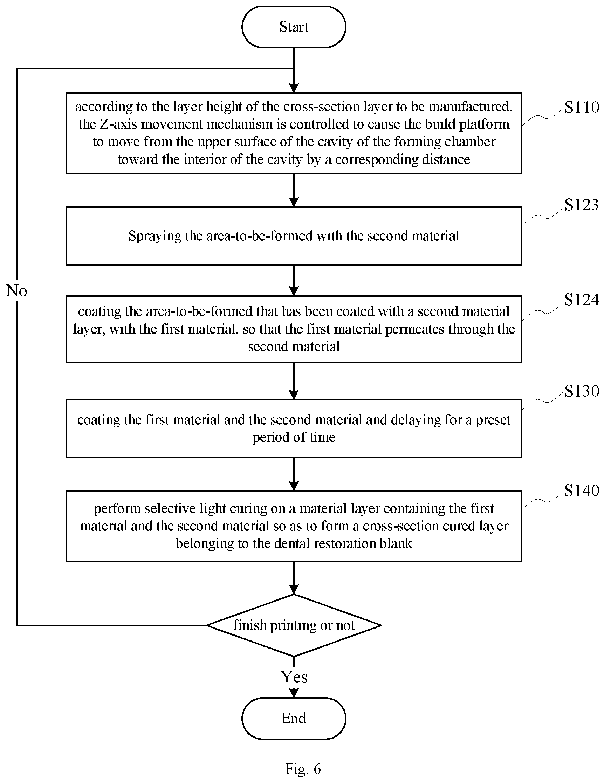

In other embodiments, please refer to Fig. 6, which shows a flow diagram of manufacturing a dental restoration blank in an implementation. Different from Fig. 3, step S120 in Fig. 4 is implemented by steps S123 and S124 in Fig. 6.

In step S123, Spraying the area-to-be-formed with the second material.

In step S124, coating the area-to-be-formed that has been coated with a second material layer, with the first material, so that the first material permeates through the second material.

Here, the processing unit controls the second coating device to spray the second material to the area-to-be-formed according to color data corresponding to a layer to be manufactured. For example, the second coating device includes a nozzle unit, and the first coating device is a recoater assembly, wherein the nozzle unit is fixed to a mounting beam of the recoater assembly and is arranged ahead of a scraper body in the moving direction; and the processing unit controls, according to the color data of the current layer, the second coating device and the second replenishment device to export the corresponding second material, and during movement with the scraper body, spray the exported second material before the scraper body coats the first material. The spray second material is dropped in droplets onto the area-to-be-formed; and at the same time, the scraper body that follows the nozzle unit coats the first material such that the second material is covered with the same. The thickness of the first material is greater than the that of the second material. After the first material and the second material are coated by any of the above coating methods, the processing unit may execute step S140, or considering factors such as the composition of the first material and the second material and the uniformity of the colors of each layer, the processing unit may execute step S130 below before step S140.

In step S130, coating the first material and the second material and delaying for a preset period of time. The preset period of time may be related to a physical permeation time period of the first material and the second material. To speed up fusion, mutually reactive materials are added to the first material and the second material. Thus, the preset period of time may be related to a reaction time period of the mutually reactive materials in the first material and the second material. As materials generated during reaction of is the mutually reactive materials permeate through each other, other components in the first material and the second material fuse with each other.

In step S140, perform selective light curing on a material layer containing the first material and the second material so as to form a cross-section cured layer belonging to the dental restoration blank.

In the case where the optical system is an optical system that provides optical radiation in a scanning-based manner as an example, the processing device provides the sliced pattern to the optical system, and the optical system sets a scanning path for a light beam based on the contour of the sliced pattern, and controls, according to the scanning path, the light beam to irradiate the material layer containing the first material and the second material in the area-to-be-formed to obtain the cross-section cured layer of the dental restoration blank.

In the case where the optical system is an optical system that provides optical radiation in a surface-radiation-based manner as an example, the processing device provides the sliced pattern to the optical system, the optical system controls, according to the pixel points of the sliced pattern, a DMD chip so that light is projected on the material layer containing the first material and the second material in the area-to-be-formed to obtain the cross-section cured layer of the dental restoration blank.

The processing unit may repeat the process described above based on steps S110-S140 to manufacture the dental restoration blank in a layer-by-layer curing manner.

Please refer to Fig. 6, which shows a structure diagram of another 3D printing apparatus of the present application. The forming chamber 31, the build platform 32, the Z-axis movement mechanism 33, the first replenishment device 34, the first coating device 35, the second replenishment device 36, and the second coating device 37 shown in Fig. 6 can all be implemented by using the forming chamber 11, the build platform 12, the Z-axis movement mechanism 13, the first replenishment device 14, the first coating device 15, the second replenishment device 16, and the second coating device 17 shown in Fig. 1 and structures provided in the corresponding description. To coat the area-to-be-formed with the second material according to the sliced pattern, the first coating device 35 coats the first material 21 before the second coating device 37.

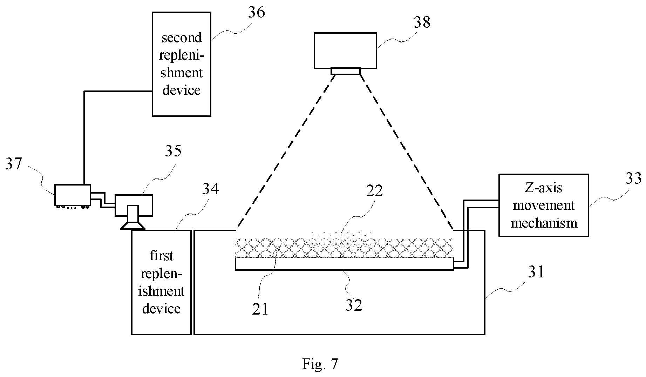

In addition, different from the 3D printing apparatus shown in Fig. 1, the optical system 38 shown in Fig. 7 includes a light source that irradiates the area-to-be-formed to cure a photocurable resin coated to the area-to-be-formed according to the sliced pattern. Thus, the first material is a viscous material formed by mixing a ceramic component and a solvent, and the second material includes a mixed liquid of the photocurable resin and the pigment.

The light source radiates the entire area-to-be-formed without interruption, or radiates the entire area-to-be-formed during coating by the second coating device, or radiates the entire area-to-be-formed after a preset delay after the second material is sprayed onto the first material. The light source includes any light source capable of providing energy for curing the photocurable resin, including, but not limited to, an optical system capable of radiating energy in a patterning manner, and an optical system incapable of radiating energy in a patterning manner. For example, the light source is an LED array, a laser arrays, or the like.

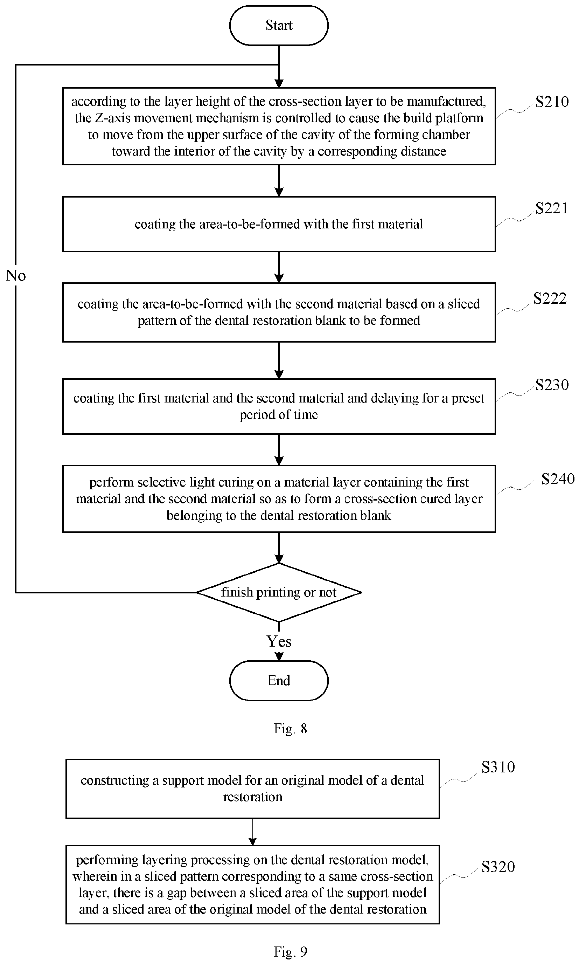

Thus, the 3D printing apparatus coats the area-to-be-formed with the first material before spraying the second material. A control device in the 3D printing apparatus sprays the second material based on the position of the second coating device in the area-to-be-formed and the current sliced pattern. Please refer to Fig. 8, which shows a flow diagram of manufacturing a cross-section cured layer of the dental restoration blank by the control device in the 3D printing apparatus.

The control device controls the Z-axis movement mechanism to cause the build platform to move toward the interior of the cavity by executing step S210, and controls the first replenishment device to push a preset volume of the first material out of the first replenishment device and controls the first coating device to coat the area-to-be-formed with the first material by executing step S221. Steps S210 and S221 are same as or similar to steps S110and S121 in Fig. 5, and will not be described in detail here.

The control device then executes step S222: coating the area-to-be-formed with the second material based on a sliced pattern of the dental restoration blank to be formed.

In some implementations, color data corresponding to a sliced pattern of each layer in the dental restoration model is unified, and the control device controls, according to the color data corresponding to the current sliced pattern to be manufactured, the second replenishment device to export the corresponding second material, and controls, according to the current sliced pattern to be manufactured, the second coating device to spray the exported second material into an area of a corresponding shape in the area-to-be-formed.

In the case where the first coating device included in the 3D printing apparatus is a recoater assembly and the second coating device included therein includes a nozzle unit as an example, in conjunction with Fig. 7, the nozzle unit may be arranged on a mounting beam of the recoater assembly and sprays the second material 22 after a scraper body coats the first material 21. The control device controls the first replenishment device 34 to push a preset volume of the first material 21 out of the first replenishment device 34 and controls the first coating device 35 to coat the area-to-be-formed with the first material 21; and during coating of the first material, based on the position of the nozzle unit moved with the scraper body in the-area-to-be-formed, an area of a shape corresponding to the sliced pattern to be manufactured in the area-to-be-formed, and the color data corresponding to the current sliced pattern to be manufactured, the control device controls the second coating device 37 to spray the exported corresponding second material 22 into the area of the shape.

In other embodiments, color data corresponding to the sliced pattern of each layer in the dental restoration model includes color distribution data. For example, the color data describes second material numbers that change from pixel points of the outer contour of the sliced pattern toward pixel points in a central area. The control device controls, according to the color distribution data corresponding to the current sliced pattern to be manufactured, the second replenishment device to export second materials with different numbers to spray hole rows in the nozzle unit and controls, according to the current sliced pattern to be manufactured, the second coating device to spray the exported second materials into an area of a corresponding shape in the area-to-be-formed.

Still in the case where the first coating device included in the 3D printing apparatus is a recoater assembly and the second coating device included therein includes a nozzle unit as an example, the nozzle unit may be arranged on a mounting beam of the recoater assembly and sprays the second materials after a scraper body coats the first material. The control device controls the first replenishment device to push a preset volume of the first material out of the first replenishment device and controls the first coating device to coat the area-to-be-formed with the first material; and during coating of the first material, based on the position of the nozzle unit moved with the scraper body in the-area-to-be-formed, an area of a shape corresponding to the sliced pattern to be manufactured in the area-to-be-formed, and the color distribution data corresponding to the current sliced pattern to be manufactured (as shown in Fig. 2), the control device controls the second coating device to spray the exported multiple second materials into the area of the shape.

During or after the execution of steps S210-S222, the control device further executes step S240. Alternatively, considering factors such as the composition of the first material and the second materials and improving the uniformity of the colors of each layer, the control device may execute step S230 below before step S240 to cure the photocurable resin in the area coated with the second material and to form a cross-section cured layer of the dental restoration blank by curing the photocurable resin.

Step S230 is same as or similar to step S130, and will not be described in detail here. For example, if the first material and the second material contain mutually reactive components, the control device performs step S240 after a delay of a preset period of time.

In step S240, the control device radiates the-area-to-be-formed. For example, if the control device controls an LED array to irradiate the entire area-to-be-formed, the second material sprayed based on the sliced pattern is cured into a cross-section cured layer of the dental restoration blank due to containing a photocurable resin, while an area only coated with the first material in the area-to-be-formed remains in a viscous liquid state on the build platform and is not cured as it does not contain a photocurable resin.

On the basis of any 3D printing apparatus described above, to provide required environmental conditions such as temperature and material stability for at least one of a mixed state, a reactive state and a fused state of the first material and the second material, the 3D printing apparatus further includes an environmental regulation system configured to regulate environmental parameters of a material layer to be formed. The environmental regulation system includes at least some or all of a heating component, a temperature sensing component, an air pressure sensing component, a gas sensing component, a temperature control component, an air pressure control component, etc. Front-end controlled components such as the heating component, the temperature sensing component and the air pressure sensing component, and data collection components may be distributed in the forming chamber, the optical system, the first coating device, the first replenishment device, the second coating device, and the second replenishment device. For example, the heating component may be arranged within the cavity of the forming chamber or on the build platform, the temperature sensing component may be arranged on the cavity or the recoater assembly, and the air pressure sensing component and the gas sensing component may be arranged within the cavity. Back-end control components such as the temperature control component and the air pressure control component may be integrated into the control device, or provided separately and connected to the control device. The control device monitors environmental data provided by sensing components such as the temperature sensing component and the air pressure sensing component throughout the manufacturing process of the dental restoration blank, and controls the heating component, the air pressure control component and the like based on the environmental data so that the environment in the forming chamber is conducive to manufacturing the dental restoration blank using the first material and the second material.

The dental restoration blank manufactured by any method described above has a uniform distribution effect in terms of color and transmittance, and the 3D printing apparatus in the present application improves the manufacturing efficiency of the dental restoration blank compared to conventional 3D manufacturing means due to the addition of colors to the curing process of each layer of the dental restoration blank.

The manufactured dental restoration blank is further at least processed as follows to obtain a dental replacement physical object. A technician performs degreasing, sintering, glazing, polishing and other treatments on the dental restoration blank taken from the 3D printing apparatus.

After printing, the object is a mixture of organic and inorganic materials, and then the organic materials need to be removed first, which is degreasing. After degreasing, the object shrinks by a certain ratio (about 20%), and the original spaces of the organic components are filled to obtain a shrunken pure ceramic part; then the shrunken dental restoration blank is sintered such that the blank is sintered into a crystallized part; after sintering, the technician also needs to confirm dimensions and manually adjust them if they are not suitable; afterwards, surface treatments such as polishing and glazing are performed, to obtain a dental replacement physical object with suitable gloss and roughness.

Thus, when a technician designs the dental restoration model based on oral images taken by a dentist, the original model of the dental restoration needs to be amplified in the transverse, longitudinal and height directions according to the shrinkage ratios in the subsequent steps such as greasing and sintering and component ratios in the first and second materials used therein. Furthermore, depending on the shape of the dental restoration to be manufactured, the printing sequence, etc., it is also needs to design a support model for the original model of the dental restoration in some shapes.

Currently, in a blank of a physical object with a support structure manufactured by a 3D printing apparatus, the support structure and a main body of the physical object are connected into a whole. After the blank of the physical object is manufactured by the 3D printing apparatus, a technician clips and polishes the support structure. For the dental restoration blank, due to different color distribution from outside to inside, the manufactured blank also needs degreasing, sintering and other operations so that the main body of the dental restoration is compact, and therefore the existing support structure removal operation is prone to damage the main body of the dental restoration blank, thereby reducing the finished product qualification rate.

Thus, the present application also provides an image processing method for constructing a support model. The image processing method is mainly executed by a computer device. The computer device at least includes a storage unit, a processing unit, and a data interface unit.

The storage unit is configured to store an original model of a dental restoration to be layered and at least one program. The storage unit may include a high speed random access memory, and may also include a non-volatile memory, such as one or more magnetic disk storage devices, flash memory devices, or other non-volatile solid state storage devices. In some embodiments, the storage unit may also include a memory remote from one or more processors, such as a network attached storage accessed via RF circuit or external port and a communication network (not shown), wherein the communication network may be the Internet, one or multiple intranets, local area networks (LANs), wide area networks (WLANs), storage area networks (SANs), etc., or a suitable combination thereof. A memory controller may control access to the storage unit by other components of the computer device, such as the processing unit and the data interface unit.

The processing unit is configured to execute at least one program stored in the storage unit to construct a support model of the stored original model of the dental restoration. The processing unit is operatively coupled with the high-speed storage unit. More specifically, the processing unit may execute the program in the storage unit to perform operations in the computer device. As such, the processing unit may include one or more general purpose microprocessors, one or more dedicated processors (ASICs), one or more field programmable logic arrays (FPGAs), or any combination thereof. The processing unit is operatively coupled with a network interface to communicatively couple the computer device to a network. For example, the network interface may connect the computer device to a personal area network (PAN) (such as a Bluetooth network), a local area network (LAN) (such as an 802.11x Wi-Fi network), and/or a wide area network (WAN) (injected into a 4G or LTE cellular network). The processing unit is also operatively coupled with an I/O port and an input structure, wherein the I/O port enables the computer device to interact with various other electronic devices, and the input structure enables a user to interact with the computer device. Thus, the input structure may include a button, a keyboard, a mouse, a touchpad, etc. In addition, an electronic display may include a touch component that facilitates a user input by detecting the occurrence and/or location of touching its screen (such as a surface of the electronic display 12) by an object.

The above-mentioned network interface, I/O port and input structure are used as examples of the data interface unit. The original model of the dental storage stored in the storage unit may be received via any of the data interface units and is stored in the storage unit via a read/write operation of the processing unit.

In some implementations, the original model of the dental restoration stored in the storage unit is constructed based on oral image data received by any of the data interface units. Before executing the method of constructing the support model described below, the processing unit constructs the original model of the dental restoration to be manufactured based on the oral image data. Considering that the subsequent degreasing, sintering and other operations of the dental restoration blank will cause shrinkage of the dental restoration blank manufactured by the 3D printing apparatus, when constructing the original model of the dental restoration, the processing unit amplifies the original model based on a preset scale. The preset scale may include respective magnification ratios in the transverse, longitudinal and height directions of the dental restoration blank. Alternatively, the preset scale is a magnification ratio determined based on maximum values of the shrinkage ratios of the dental restoration blank in the transverse, longitudinal and height directions during the subsequent treatments on the dental restoration blank. The processing unit saves the amplified original model of the dental restoration in the storage unit for retrieval during the execution of an image processing method described below.

Please refer to Fig. 9, which shows a flow diagram of an image processing method for designing a support model based on an original model of a dental restoration. The processing unit of the computer device calls at least one program to execute the following steps to achieve the purpose of constructing a support model for the original model of the dental restoration.

In step S310, constructing a support model for an original model of a dental restoration.

Here, the computer device may construct the support model according to an initial placement posture of the original model of the dental restoration. The initial placement posture refers to the placement angle and placement position when the original model of the dental restoration is imported. The original model of the dental restoration is usually placed vertically with the root facing downward and the crown facing upward, and the computer device constructs the support model according to the above-mentioned placement posture.

In some implementations, to manufacture a plurality of dental restoration blanks using the 3D printing apparatus, a plurality of original models of dental restorations are selected, and support models corresponding to the plurality of original models of dental restorations are constructed. Here, to increase the manufacturing efficiency of the 3D printing apparatus, the placement postures of the original models of dental restorations are adjusted, for example, in accordance with at least one of the conditions: the heights of the original models of dental restorations are substantially same, and the number of the placed original models of dental restorations is maximized, and the computer device constructs the support models based on the dental restoration models after adjustment of printing postures.

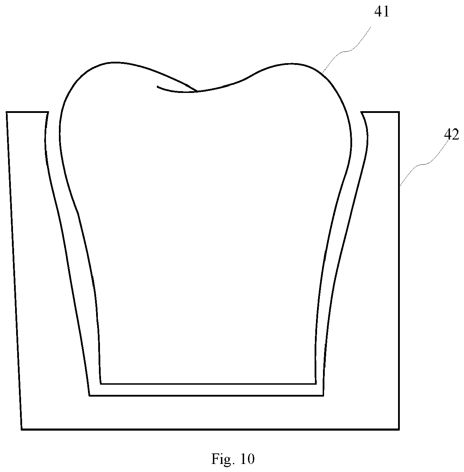

The support model may include a base portion and a support portion, wherein the base portion may be a plate-like structure, and the support portion is a multi-column, net-like or other structure. In some implementations, the support model accommodates the original model of the dental restoration. For example, referring to Fig. 10, which shows a shape diagram of the support model 42 and the original model 41 of the dental restoration, the support portion of the support model 42 is configured to be a bowl-like structure based on the outer contour of the original model 41 of the dental restoration.

The support model constructed by the computer device may define a connection boundary with the outer contour of the original model of the dental restoration by point connection, line connection or surface connection. There is a gap between the connection boundary of the support model and the outer contour of the original model of the dental restoration. At this point, a three-dimensional model containing the support model and the original model of the dental restoration is called a dental restoration model.

In step S320, performing layering processing on the dental restoration model, wherein in a sliced pattern corresponding to a same cross-section layer, there is a gap between a sliced area of the support model and a sliced area of the original model of the dental restoration.

Here, the computer device performs layering processing on the dental restoration model according to preset layer heights. The layer heights may be set uniformly. The layered heights may also be differentiated according to whether the dental restoration model contains a cross-section of the original model of the dental restoration. In an example, a layer height set for a layer that only contains the support model as a part of the dental restoration model may be greater than a layer height for a layer that contains the original model of the dental restoration. For example, the computer device first performs layering processing on a support model part at the bottom of the dental restoration model based on a first layer height according to a printing sequence, and determines whether an upper surface of a cross-section layer obtained by the layering contains a sliced area of the original model of the dental restoration. If the upper surface does not contain a sliced area of the original model of the dental restoration, it continues the layering processing based on the first layer height. If the upper surface contains a sliced area of the original model of the dental restoration, it performs layering processing again on the cross-section layer containing the sliced area of the original model of the dental restoration based on a second layer height, and performs layering processing on the subsequent part of the dental restoration model based on the second layer height.

The computer device, based on an upper and/or lower surface of each cross-section layer obtained by the layering, also determines a sliced pattern of the cross-section layer. For example, if the computer device assumes, by default, that a cross-section layer obtained by the layering has identical upper and lower surfaces, it uniformly determines the upper or lower surface of the cross-section layer as a sliced pattern of the corresponding cross-section layer. In the case where a sliced pattern of a same layer contains both the support model and a cross-section layer of the original model of the dental restoration, there is a gap between a sliced area of the support model and a sliced area of the original model of the dental restoration in the corresponding sliced pattern.

During the layering processing, the computer device also determines color data of sliced patterns of layers in the original model of the dental restoration according to tooth color information in acquired oral image data.

In some implementations, the computer device assigns values to the color data of the layers in the original model of the dental restoration based on the tooth color information in the oral image data according to a preset color standard. The color standard includes, but is not limited to: VITA colorimetric card, custom color card standards, etc. For example, one or more color card numbers are determined according to the VITA colorimetric card from positions corresponding to the layers of the original model of the dental restoration in the oral image data, and the determined one or more color card numbers are assigned to all pixel points of the sliced patterns in the corresponding layers.

In other implementations, the computer device determines color data of the outer contours of the sliced patterns of the layers of the original model according to positions corresponding to the layers in the oral image data; and determines color distribution data of pixel points in the sliced patterns from the outer contours inward based on a preset color change condition. The color change condition is related to the position of the constructed original model of the dental restoration in the oral cavity, the transparency of the tooth, and the change properties of colors.

In further embodiments, the computer device can also determine color data of the support model according to the determined color data of the outer contours of the sliced patterns of the layers of the original model so as to manufacture a dental restoration blank with a support using the 3D printing apparatus and materials shown in Fig. 1 or 7.

The computer device saves the dental restoration model after layering and color processing in a file. A technician can import the file into the 3D printing apparatus. Based on the 3D printing apparatus provided in the above examples, the 3D printing apparatus can manufacture a dental restoration blank including a support based on any of the above structures and the matching manufacturing method.

The optical system of the 3D printing apparatus irradiates the area-to-be-formed based on a sliced pattern containing a sliced area of the support model and a sliced area of the original model, resulting in an uncured filling material between a cross-section cured layer of a cured support and the cross-section cured layer of the dental restoration blank. The filling material may include only the first material, or include both the first material and the second material, depending on the control device's control of the material coated by the first coating device and the second coating device.

As the filling material contains the viscous material of the first material, and the manufactured support restricts the flow of the viscous material, the support effectively supports the shape of the manufactured dental restoration blank through the filling material; and as the uncured filling material is between the manufactured dental restoration blank and the support, the support does not need to be removed from the dental restoration blank.

The above embodiments are merely illustrative of the principles of the present application and effects thereof, and are not intended to limit the present application. Any person skilled in the art can modify or change the above embodiments without departing from the spirit and scope of the present application. Therefore, all equivalent modifications or changes made by those skilled in the art without departing from the spirit and technical ideas disclosed in the present application are still encompassed within the scope of the claims of the present application.

## Claims

1. A manufacturing method, applied to a 3D printing apparatus to manufacture a dental restoration blank, the manufacturing method comprising:
coating an area-to-be-formed with a first material and a second material respectively, wherein the first material is a viscous material containing a ceramic component, and the second material comprises a pigment;
carrying out selective light curing on a material layer containing the first material and the second material so as to form a cross-section cured layer belonging to the dental restoration blank; and
repeating these steps, so that cross-section cured layers are accumulated layer by layer so as to manufacture the dental restoration blank.

2. The manufacturing method according to claim 1, wherein the step of coating an area-to-be-formed with a first material and a second material respectively comprises:
coating the area-to-be-formed with the first material; and
coating the area-to-be-formed that has been coated with a first material layer, with the second material, so that the second material permeates through the first material.

3. The manufacturing method according to claim 2, wherein the step of coating the area-to-be-formed that has been coated with a first material layer, with the second material, comprises: coating the area-to-be-formed with the second material based on a sliced pattern of a dental restoration blank to be formed.

4. The manufacturing method according to claim 1, wherein the step of coating an area-to-be-formed with a first material and a second material respectively comprises:
spraying the second material to the area-to-be-formed; and
coating the area-to-be-formed that has been coated with a second material layer, with the first material, to cover the second material.

5. The manufacturing method according to claim 1, wherein the first material and the second material further comprise mutually reactive materials to promote permeation of the second material into the first material.

6. The manufacturing method according to claim 1, wherein the first material further comprises a photocurable resin; or the first material further comprises a solvent and the second material further comprises a photocurable resin.

7. The manufacturing method according to claim 1, further comprising: acquiring the second material according to color distribution data corresponding to a sliced pattern in a dental restoration model and coating the same to the area-to-be-formed.

8. The manufacturing method according to claim 1, wherein after coating the first material and the second material and delaying for a preset period of time, selective light curing is carried out on the material layer containing the first material and the second material so as to form the cross-section cured layer belonging to the dental restoration blank.

9. The manufacturing method according to claim 1, wherein the manufacturing method further comprises the following step: regulating environmental parameters of the coated material layer.

10. The manufacturing method according to claim 1, wherein the step of carrying out selective light curing on a material layer containing the first material and the second material so as to form a cross-section cured layer belonging to the dental restoration blank comprises:
carrying out selective light curing according to a sliced area of a support model and a sliced area of an original model of a dental restoration in an acquired sliced pattern, wherein there is an uncured filling material between a cured cross-section cured layer of a support and the cross-section cured layer of the dental restoration blank.

11. A 3D printing apparatus, comprising:
a forming chamber, accommodating a build platform therein;
an optical system, configured to selectively cure a radiated material layer to form a cross-section layer belonging to a dental restoration blank;
a Z-axis movement mechanism, connected to the build platform, to cause the build platform to move to provide an area-to-be-formed in the forming chamber;
a first replenishment device, configured to provide a first material to be coated, wherein the first material is a viscous material containing a ceramic component;
a second replenishment device, configured to provide a second material to be coated, wherein the second material contains a pigment;
a first coating device, configured to coat the area-to-be-formed with the first material;
a second coating device, configured to coat the area-to-be-formed with the second material; and
a control device, configured to control the optical system, the Z-axis movement mechanism, the first replenishment device, the second replenishment device, the first coating device and the second coating device, and accumulate, layer by layer, cross-section cured layers on the build platform so as to manufacture the dental restoration blank.

12. The 3D printing apparatus according to claim 11, wherein the control device controls the second coating device to spray the second material in the form of droplets to the area-to-be-formed; and controls the first coating device to coat the area-to-be-formed that has been coated with a second material layer, with the first material.

13. The 3D printing apparatus according to claim 12, wherein the control device, based on a sliced pattern of the dental restoration blank to be formed, controls the second coating device to coat the area-to-be-formed with the second material.

14. The 3D printing apparatus according to claim 11, wherein the control device controls the first coating device to coat the area-to-be-formed with the first material layer; and controls the second coating device to coat the area-to-be-formed that has been coated with a first material layer, with the second material, so that the second material permeates through the first material.

15. The 3D printing apparatus according to claim 13, wherein the second material comprises a mixed liquid of a photocurable resin and the pigment; and the optical system comprises a light source that irradiates the area-to-be-formed to cure the photocurable resin coated to the area-to-be-formed according to the sliced pattern.

16. The 3D printing apparatus according to claim 11, wherein the first coating device is a recoater assembly and the second coating device is a spraying assembly.

17. The 3D printing apparatus according to claim 16, wherein the spraying assembly comprises a nozzle unit having at least one spray hole; and the recoater assembly comprises a mounting beam spanning the build platform, and a scraper body arranged on the mounting beam, wherein the nozzle portion is arranged on the mounting beam.

18. The 3D printing apparatus according to claim 17, wherein the second replenishment device comprises at least two containers for independently containing the second material, wherein the pigment composition and/or ratio in the second material contained in each container is different; and the nozzle unit comprises a plurality of spray holes and a plurality of channels, each channel being connected between one of the containers and a set spray hole.

19. The 3D printing apparatus according to claim 16, wherein the control device, based on color distribution data corresponding to a sliced pattern in a dental restoration model, controls the spraying assembly to coat the area-to-be-formed with the second material.

20. The 3D printing apparatus according to claim 11, wherein the first material and the second material further comprise mutually reactive materials to promote permeation of the second material into the first material.

21. The 3D printing apparatus according to claim 11, wherein the first material further comprises a photocurable resin; or the first material further comprises a solvent and the second material further comprises a photocurable resin.

22. The 3D printing apparatus according to claim 11, further comprising an environmental regulation system configured to regulate environmental parameters of a material layer to be formed.

23. The 3D printing apparatus according to claim 11, wherein the control device is configured to, after controlling coating the first material and the second material respectively by the first coating device and the second coating device and delaying for a preset period of time, control the optical system to perform selective light curing on a material layer containing the first material and the second material so as to form a cross-section cured layer belonging to the dental restoration blank.

24. The 3D printing apparatus according to claim 11, wherein the optical system is a scanning-based optical system or a surface-exposure-based optical system.

25. The 3D printing apparatus according to claim 11, wherein the control device controls selective light curing according to a sliced pattern of a support and a sliced pattern of the dental restoration blank in an acquired sliced pattern, wherein there is an uncured filling material between a cured cross-section cured layer of a support and the cross-section cured layer of the dental restoration blank.

26. A control device for a 3D printing apparatus, comprising:
a storage unit, configured to store a dental restoration model to be formed, and at least one program; and
a processing unit, connected to the storage unit, and configured to execute the at least one program to control the 3D printing apparatus to execute the manufacturing method according to any one of claims 1-10 so as to manufacture a dental restoration blank corresponding to the dental restoration model.

27. A manufacturing method, comprising:
using a dental restoration blank obtained by the manufacturing method according to any one of claims 1-10; and
processing the obtained dental restoration blank to obtain a dental replacement physical obj ect.

28. An image processing method, comprising:
constructing a support model for an original model of a dental restoration; and
performing layering processing on a dental restoration model containing the support model, wherein in a sliced pattern of a same layer, there is a gap between a sliced area of the support model and a sliced area of the original model of the dental restoration.

29. The image processing method according to claim 28, wherein the step of constructing a support model for an original model of a dental restoration comprises: constructing a support model that accommodates the original model of the dental restoration.

30. The image processing method according to claim 28, wherein the image processing method further comprises a step of amplifying the original model based on a preset scale.

31. The image processing method according to claim 28, wherein the image processing method further comprises a step of determining color data of sliced patterns of layers in the original model of the dental restoration according to tooth color information in acquired oral image data.

32. The image processing method according to claim , wherein the image processing method further comprises a step of setting a printing posture of the dental restoration model, so as to construct the corresponding support model based on the determined printing posture.

33. A computer device, comprising:
a storage unit, configured to store at least one program; and
a processing unit, configured to call the program stored in the storage unit to execute the image processing method according to any one of claims 28-32.
